# EUROPÄISCHE PATENTSCHRIFT

(11) **EP 0 136 396 B1**
(45) Veröffentlichungstag und Bekanntmachung des Hinweises auf die Patenterteilung: **12.08.1987**
(21) Anmeldenummer: 84103354.1
(22) Anmeldetag: 27.03.1984
(51) Int. Cl.: C09J 3/16, C08G 18/48

(54) **Verwendung ausgewählter Polyetherole und Polyisocyanate zur Herstellung von Klebmitteln auf Polyurethanbasis**
Use of selected polyetherols and polyisocyanates for preparing adhesives on a polyurethane basis
Utilisation de polyétherols et de polyisocyanates séléctionnés pour la préparation de matieres adhesives à base de polyurethane

(30) Priorität: 20.09.1983 DE 3333848
(43) Veröffentlichungstag der Anmeldung: 10.04.1985
(73) Patentinhaber: Th. Goldschmidt AG, 45127 Essen (DE)
(72) Erfinder: Fock, Jürgen, Dr., D-4000 Düsseldorf 30 (DE); Schedlitzki, Dietmar, Dr., D-4300 Essen (DE)

## Beschreibung

Polyurethane werden durch Umsetzung von Polyolen und Polyisocyanaten erhalten. Je nach Wahl der Polyole und/oder der Polyisocyanate entstehen Polyurethane verschiedener Anwendungsmöglichkeiten. Polyurethane werden u.a. auch als Kleb- oder als Überzugsmittel verwendet.

Will man Polyurethane als Kleb- oder Überzugsmittel verwenden, kann man als Polyolkomponente Polyetherole, Polyesterole, Rizinusöl oder Polymerisate auf Acrylbasis mit Hydroxylgruppen einsetzen..

Polyetherole entstehen durch Anlagerung von Alkylenoxiden, inbesondere Ethylenoxid und/oder Propylenoxid, an mehrwertige Alkohole. Polyetherole haben durch ihren Gehalt an Oxyethylengruppen den Nachteil, daß sie verhältnismäßig hydrpohil sind und deshalb zur Aufnahme von Wasser neigen. Bei der Umsetzung mit Polyisocyanten enthwickelt sich im Polyurethan eine der Wassenmenge entsprechende Menge Kohlendioxid in Form von kleinen Bläschen, welche die mechanischen Eigenschaften und mitunter auch die Haftungseigenschaften der Polyurethane auf dem Untergrund beeinträchtigen. Der hydrophile Charakter der Polyole wird des weiteren durch den Gehalt an Hydroxylguppen beeinflußt. Die nachfolgenden Aussagen über die Hydrophilie chemisch verschiedener Polyole beziehen sich deshalb auf vergleichbare Hydroxylgehalte.

Darüber hinaus zeigen Polyetherole auf der Basis von Ethylen- und Propylenoxid mit üblichen Startalkoholen den Nachteil häufig ungenügender Haftung auf verschiedenen Werkstoffen.

Der Erfindung liegt die Aufgabe zugrunde, Polyetherole zu finden, welche eine verbesserte Haftung an Glas und thermoplastischen Kunststoffen, wie z. B. Polybutylenterephthalat, Polyethylen oder Polypropylen, verringerte Aufnahme von Wasser sowie eine gute Mischbarkeit mit anderen Polyolen aufweisen sollen.

Es sind zwar aus der europäischen Patentanmeldung 0 064 236 Polyether bekannt, welche durch Polymerisation eines 1,2-Epoxyalkans, das 8 bis 26 Kohlenstoffatome enthält, und eines Tetrahydrofurans in Gegenwart einer Hydroxyverbindung der Formel

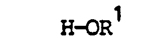

in der R¹ Wasserstoff, einen Alkylrest mit 1 bis 24 Kohlenstoffatomen oder einen Hydroxyalkylrest mit 2 bis 40 Kohlenstoffatomen bedeutet,
erhältlich sind. Diese Polyetherole sollen aber nach der Lehre der europäischen Patentanmeldung als Schmiermittel verwendet werden. Überdies mußte der Fachmann annehmen, daß bei Verwendung von Alkylenoxiden mit mehr als 3 Kohlenstoffatomen im Molekül die Haftung der mit solchen Polyetherolen hergestellten Polyurethanklebmittel verringert werden würde, da Oligomere oder Polymere mit langen Alkanketten in der Regel eher trennende als adhäsive Eigenschaften aufweisen.

Aus der DE-PS 32 01 478 sind Polyether bekannt, welche dadurch hergestellt werden können, daß man a-Olefinoxide der Formel 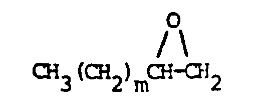 wobei m = 3 bis 13 ist, oder deren Gemische, wobei bis zu 66 Mol-% der a-Olefinoxide durch Propylenoxid ersetzt sein können, durch stöchiometrische Polymerisation an Alkalialkoholate der Formel (MO)_{z}R' wobei M ein Alkalikation, R' ein z-wertiger aliphatischer KKohlenwasserstoffrest mit 1 bis 4 Kohlenstoffatomen, ein z-wertiger Arylrest oder ein z-wertiger Alkarylrest und z 1, 2 oder 3 ist, bei Temperaturen von 80 bis 180°C anlagert und die erhaltene Verbindung 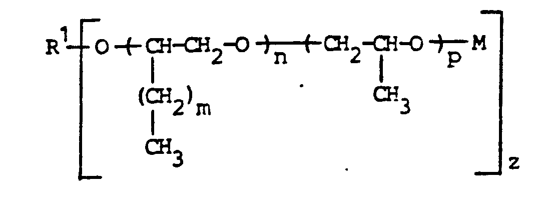 wobei n eine ganze Zahl > 1 und p = Null oder eine ganze Zahl ≦ 2n ist, in an sich bekannter Weise durch Umsetzung mit Kohlenwasserstoffhalogeniden unter Abspaltung von Alkalihalogenid in die entsprechenden Polyoxyalkylenether oder durch Behandlung mit Mineralsäure und Abtrennung des Alkalisalzes der Mineralsäure in die entsprechenden Polyoxyalkylenetherole überführt.

Des weiteren sind in der DE-OS 32 01 479 Polyether der allgemeinen Formel 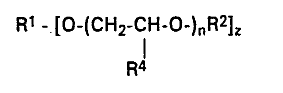 beschrieben, worin die Substituenten und Indices folgende Bedeutung haben:
R¹ = z-wertiger Kohlenwasserstoffrest,
_{R}2 = Wasserstoff-, Alkyl-, Aryl-, 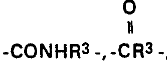 , oder -SiR₃³-Rest, wobei höchstens 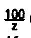 % aller Reste R² Wasserstoffreste sein durfen,
R³ = einwertiger Kohlenwasserstoffrest,
R⁴ = geradkettiger Alkylrest mit im Mittel 4 bis 14 Kohlenstoffatomen oder Methyl- oder Wasserstoffrest, wobei aber höchstens 90 Mol-% der Reste R⁴ Methyl- oder Wasserstoffreste sein dürfen,
n = ganze Zahl ≧ 2,
z = ganze Zahl von 1 bis 3.

In beiden Fällen werden derartige Polyether als Wirkstoffe in Entschäumerformulierungen eingesetzt. Auch hier mußte der Fachmann annehmen, daß die Haftung solcher Polyether auf Kunstoffen oder anderen Werkstoffen gering sein würde.

In der US-A- 3 813 380 ist ein Kontaktkleber beschrieben, der durch Vermischen eines Polyalkylenpolyetherpolyols mit bestimmten Diisocyanols-diurethanen hergestellt ist.

Überraschenderweise wurde jedoch gefunden, daß dies nicht der Fall ist, sondern daß bei bestimmten Polyetherolen, welche Oxyalkyleneinheiten aufweisen, die durch Anlagerung höherer Alkylenoxide erhalten worden sind, die Haftung der Klebmittel auf Glas- und/oder vielen Kunststoffoberflächen verbessert wird.

Gegenstand vorliegender Erfindung ist deshalb die Verwendung von Polyetherolen, erhältlich durch Anlagerung von 30 bis 100 Gew.-% eines oder mehrerer Alkylenoxide mit 4 bis 20 Kohlenstoffatomen, 0 bis 70 Gew.-% Tetrahydrofuran, wobei ein oder mehrere Wasserstoffreste durch niedere Alkylreste, vorzugsweise Methylreste, ersetzt sein können und 0 bis 50 Gew.-% Propylenoxid (Gew.-% jeweils auf Gesamtmenge der Alkylenoxide bezogen) blockweise oder in statistischer Anordnung an 1- bis 4-wertige Alkohole mit bis zu 8 Kohlenstoffatomen, wobei die Alkylenoxide in solcher Menge angelagert sind, daß die Polyetherole eine OH-Zahl von 30 bis 450 aufweisen, als ausschließliche oder anteilige Polyolkomponente und von Polyisocyanaten der Formel

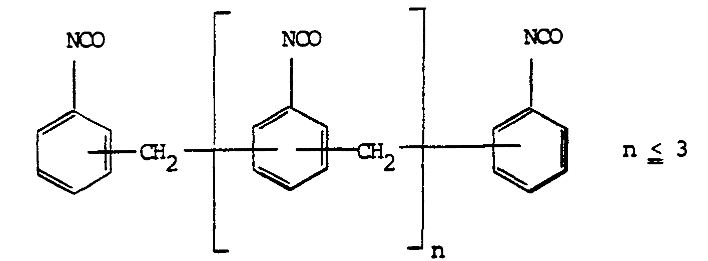

oder 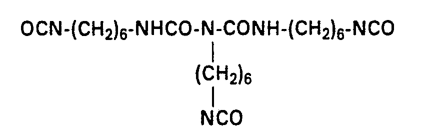 als ausschließliche Polyisocyanatkomponente zur Herstellung von Klebmitteln auf Polyurethanbasis.

Die Herstellung der Polyetherole geschieht in an sich bekannter Weise unter Verwendung von alkalischen oder sauren Katalysatoren und kann z. B. entsprechend der europäischen Patentameldung 0 064 236 erfolgen.

Als Startalkohole dienen, wie im Anspruch angegeben, aliphatische Alkohole mit bis zu 8 Kohlenstoffatomen, welche 1 bis 4 Hydroxylgruppen aufweisen.

Beispiele 1-wertiger Alkohole sind: Methanol, Ethanol, Propanol, Isopropanol, Butanol, Isobutanol, tert.-Butanol, Allylalkohol, Hexanol und 2-Ethyl-hexanol.

Beispiele 2-wertiger Alkohole sind: Ethandiol-1,2, Propandiol-1,2, Propandiol-1,3, Butandiol-1,2, Butandiol-1,4 und Hexandiol-1,6.

Beispiele 3-wertiger Alkohole sind: Glycerin und Trimethylolpropan.

Beispiel eines 4-wertigen Alkohols ist Pentaerythrit.

An diese vorgenannten Startalkohole werden die im Patentanspruch genannten Alkylenoxide angelagert.

Als Alkylenoxide werden 30 bis 100 Gew.-% solcher Alkylenoxide verwendet, welche 4 bis 20 Kohlenstoffatome aufweisen. Diese entsprechen der Formel 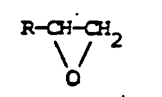 wobei R ein geradkettiger oder verzweigter Alkylrest mit 2 bis 18 Kohlenstoffatomen, vorzugsweise 2 bis 14 Kohlenstoffatomen, ist.

Beispielsweise seien die folgenden 1,2-Epoxyalkane genannt: 1,2-Epoxy-octan, 1,2-Epoxy-nonan, 1,2-Epoxydecan, 1,2-Epoxy-undecan, 1,2-Epoxy-dodecan, 1,2-Epoxy-tetradecan, 1,2-Epoxy-hexadecan und 1,2-Epoxyoctadecan.

Die Polyetherole können auch Oxyalkyleneinheiten enthalten, die durch Anlagerung von Tetrahydrofuran entstehen. Es ist jedoch auch möglich, Tetrahydrofurane zu verwenden, bei denen ein oder mehrere Wasserstoffreste durch geradkettige oder verzweigte niedere Alkylreste mit 1 bis etwa 6 Kohlenstoffatomen ersetzt sind. Beispiele solcher substituierter Tetrahydrofurane sind: 2-Methyl-tetrahydrofuran, 3-Methyl-tetrahydrofuran, 4-Methyl-tetrahydrofuran, 5-Methyl-tetrahydro-furan, 3- oder 4-lsopropyl-tetrahydrofuran, 3,4-Diisopropyl-tetrahydrofuran, 2,3,4-Tributyl-tetrahydrofuran und 2,3,4,5-Tetramethyl-tetrahydio-furan. Die sich vom Tetrahydrofuran ableitenden Oxytetramethyleneinheiten können in den Polyetherolen in einer Menge von 0 bis 70 Gew.-% (bezogen auf Oxyalkyleneinheiten) enthalten sein. Vorzugsweise sind 0 bis 50 Gew.-% enthalten.

Die Polyetherole können auch Anteile an Oxypropyleneinheiten aufweisen, deren Gehalt in den Polyetherolen jedoch 50 Gew.-% (bezogen auf Oxyalkyleneinheiten) nicht übersteigen darf. Vorzugsweise beträgt der Gehalt an Oxypropyleneinheiten weniger als 30 Gew.-%.

Die Herstellung der Polyetherole geschieht in an sich bekannter Weise unter Verwendung von alkalischen oder sauren Katalysatoren. Als Katalysatoren sind deshalb Alkalihydroxide oder Alkalimethylate sowie LewisSäuren, wie z. B. Bortrifluorid und seine Addukte (Bortriflouriddiethyletherat, Bortrifluoridtetrahydrofuranat), Aluminium-chlorid, Eisen-(III)-Chlorid, Zinn-(IV)-Chlorid, Titantetrachlorid, Zinnchlorid und Antimonpentachlorid geeignet. Zweckmäßigerweise verwendet man bei der Polymerisation von Alkylenoxiden allein alkalische, bei der Copolymerisation mit Tetrahydrofuran saure Katalysatoren.

Die Verbindungen können zweckmäßig in der Weise hergestellt werden, daß man den Startalkohol zusammen mit dem Katalysator in ein Reaktionsgefäß gibt und die Alkylenoxide im Gemisch oder nacheinander zu dem Reaktionsgemisch gibt. Nach Beendung der Anlagerung erfolgt die Aufarbeitung in üblicher Weise, beispielsweise durch Neutralisation unter Zugabe von Wasser, nachfolgender Trocknung und Reinigung des Polyethers durch Filtration.

Die Polyetherole sollen eine OH-Zahl von 30 bis 450 aufweisen. Durch die zusätzliche Bedingung der Verwendung von 1- bis 4-wertigen Startalkoholen ergeben sich unmittelbar die zulässigen Molekulargewichtsbereiche. Für die besonders bevorzugten 2- oder 3-funktionellen Polyetherole beträgt der Molekulargewichtsbereich 250 bis 5500.

Die Polyetherole, die von einwertigen aliphatischen Alkoholen abgeleitet sind, werden in aller Regel nur als anteilige Polyolkomponente verwendet, da sie in Verbindung mit den mehrwertigen Polyisocyanaten Produkte begrenzten Molekulargewichts ergeben. Wie oben ausgeführt, sind Verbindingen mit 2 oder 3 Hydroxylgruppen im durchschnittlichen Molekül besonders bevorzugt.

Zur Herstellung der Klebmittel werden Polyisocyanate folgender Formel verwendet 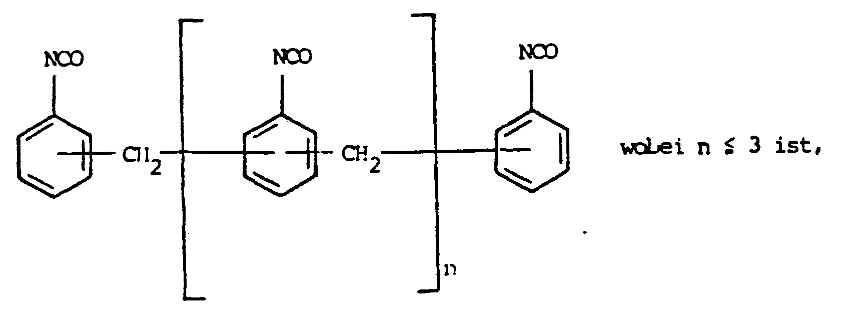 oder

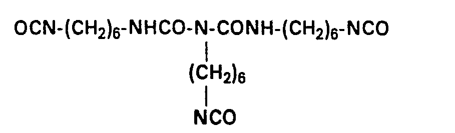

Diese Isocyanate sind im Handel erhältlich.

Zur Herstellung von Klebmitteln werden die Polyetherole mit den Polyisocyanten in solchen Mengen vermischt, daß jeder Hydroxylgruppe der Polyetherole mindestens eine Isocyanatgruppe der Polyisocyanate entspricht. Vorteilhaft ist häuftig ein molarer Überschuß an Isocyanatgruppen von bis zu 30 Mol-%.

Die erfindungsgemäß aus den vorbeschriebenen Polyetherolen durch Umsetzung mit den genannten Polyisocyanaten erhaltenen Klebmittel zeigen gute Haftung an Oberflächen aus Glas und thermoplastischen Kunststoffen, insbesondere Polyethylen, Polypropylen, Polybutylenterephthalat u.a.

Dabei ist die Haftung der Klebmittel deutlich besser als diejenige von Klebmitteln, deren Polyetherole im wesentlichen aus Oxyethylen- und Oxypropyleneinheiten bestehen. Die Wasseraufnahme der Polyetherole ist deutlich vermindert, so daß es zu keiner Bildung von Kohlendioxidbläschen bei der Vermischung mit Polyisocyanaten kommt.

Klebmittel, welche durch Vermischung der erfindungsgemäß zu verwendenden Polyetherole mit den ausgewählten Polyisocyanaten hergestellt sind, weisen relativ lange Topfzeiten auf und lassen sich deshalb ausgezeichnet verarbeiten. Durch Zusatz von entsprechenden, dem Fachmann bekannten Katalysatoren läßt sich die Topfzeit und damit die Aushärtung des Klebstoffes verringern bzw. beschleunigen. Beispiele solcher Katalysatoren sind Zinnverbindungen, insbesondere organische Zinnverbindungen, wie z. B. Zinnoctoat oder Dibutylzinndilaurant. Als Katalysatoren sind ferner tert. Amine, wie z. B. Dimethylbenzylamin, Dicyclohexylmethylamin, Dimethylpiperazin, 1-Aza-bicyclo-(3,3,0)-octan oder 1,4-Diaza-bicyclo-(2,2,2)-octan, geeignet.

Den Klebmitteln können weitere Zusatzstoffe an sich bekannter Art zugesetzt werden. Derartige Zusatzstoffe sind z. B. Pigmente, Füllstoffe, Fasern, Trockenmittel oder Haftverbesserungsmittel.

In den folgenden Beispielen werden die Herstellung der erfindungsgemäß zu verwendenden Polyetherole, die Konfektionierung von Klebmitteln unter Verwendung der ausgewählten Polyetherole und Polyisocyanate sowie die anwendungstechnischen Eigenschaften derartiger Klebmittel und der damit erzielten Verklebungen noch näher erläutert.

### Herstellung der Polyetherole

### Beispiel 1

Eine Mischung aus 71,9 g Trimethylolpropan und 7,0 g Kaliummethylat wird bei 140°C im Vakuum 30 min erhitzt und das entstehende Methanol abgezogen. Nach Abkühlung auf 105°C werden 251 g technisches Butylenoxid unter Stickstoff innerhalb von 2 h zudosiert. Das Reaktionsgemisch wird weitere 3 h auf 110°C erhitzt. Nach Abkühlung auf Raumtemperatur werden 100 g Toluol und 50 g Wasser zugesetzt, und man stellt mit wäßriger, 30 gew.-%iger Phosphorsäure einen pH-Wert von 6,5 bis 7 ein. Anschließend zieht man das Wasser, Toluol und geringe Restmengen Butylenoxid im Vakuum bei 100°C ab und filtriert das Produkt unter Druck. Die Eigenschaften des erhaltenen Polyetherols sind der Tabelle 1 zu entnehmen.

### Beispiel 2

Eine Mischung aus 134,2 g Trimethylolpropan, und 14,0 g Kaliummethylat wird bei 140°C im Vakuum 30 min erhitzt und das entstehende Methanol abgezogen. Nach Abkühlung auf 120°C werden 384 g technisches 1,2-Epoxyoctan unter Stickstoff innerhalb von 3 h zudosiert, wobei man die Temperatur auf 140° C steigert. Das Reaktionsgemisch wird weitere 3 h auf 140°C erhitzt. Nach Abkühlung auf Raumtemperatur werden 200 g Toluol und 100 g Wasser zugesetzt, und es wird wie in Beispiel 1 aufgearbeitet. Die Eigenschaften des Polyetherols sind in Tabelle 1 enthalten.

### Beispiel 3

Aus 107,4 g Trimethylolpropan, 11,2 g Kaliummethylat und 470,4 g eines technischen a-Olefinoxids mit einem Epoxysauerstoffgehalt von 8,2 Gew.-% wird bei 140° C in gleicher Weise wie in den Beispielen 1 und 2 ein Polyetherol, dessen Daten in Tabelle 1 aufgeführt sind, hergestellt.

### Beispiel 4

Eine Mischung aus 134,2 g Trimethylolpropan und 14,0 g Kaliummethylat wird bei 140°C im Vakuum 30 min erhitzt und das entstehende Methanol abgezogen. Bei 130°C werden 392 g eines technischen a-Olefinoxids mit einem Epoxysauerstoffgehalt von 8,2 Gew.-% unter Stickstoff innerhalb von 3 h und danach bei 80°C 36 g Butylenoxid innerhalb von 30 min zudosiert. Danach erhitzt man noch 3 h bei 85°C und arbeitet den Polyether wie in Beispiel 1 beschrieben auf. Die Eigenschaften des Polyethers sind in Tabelle 1 enthalten.

### Beispiel 5

Zu einer Mischung aus 67,1 g Trimethylolpropan, 216,3 g wasserfreiem Tetrahydrofuran und 14,7 g einer 50 gew.-%igen Bortrifluorid-Etheratlösung in Diethylether werden unter Stickstoff bei 30°C 216,3 technisches Butylenoxid innerhalb von 2 h zudosiert. Man läßt weitere 4 h bei 30° C reagieren, bis der Epoxysauerstoffgehalt gegen Null gesunken ist, setzt dann wäßrige konzentrierte Ammoniumhydroxidlösung zu, bis der pH-Wert ca. 9 beträgt, und gibt 100 g Toluol und 50 g Wasser zu. Man stellt mit wäßriger 30 gew.-%iger Phosphorsäure einen pH-Wert von 6,5 bis 7 ein, zieht dann Toluol, Wasser und nicht umgesetztes Tetrahydrofuran im Vakuum bei 100° C ab und filtriert das Produkt unter Druck. Die Eigenschaften des Polyetherols sind in Tabelle 1 enthalten.

### Beispiel 6

Aus 22,5 g Butandiol-1,4, 238,7 g Tetrahydrofuran, 17,4 g einer 50 gew.-%igen Lösung von Bortrifluorid-Etherat in Diethylether und 238,7 g technischem Butylenoxid wird bei 30° C in gleicher Weise wie in Beispiel 5 beschrieben ein Polyetherol, dessen Eigenschaften in Tabelle 1 enthalten sind, hergestellt.

### Beispiel 7

Aus 80,5 g Trimethylolpropan, 129,8 g Tetrahydrofuran, 10,4 g einer 50 gew.-%igen Lösung von Bortrifluorid-Etherat in Diethylether und 352,8 g eines technischen a-Olefinoxids mit einem Epoxysauerstoffgehalt von 8,2 Gew.-% wird bei 30° C in gleicher Weise wie in Beispiel 5 beschrieben ein Polyetherol, dessen Eigenschaften in Tabelle 1 enthalten sind, hergestellt.

### Beispiel 8

Aus 24,3 g Butandiol-1,4, 138,7 g Tetrahydrofuran, 17.4 g einer 50 gew.-%igen Lösung von Bortrifluorid-Etherat in Diethylether und 377 g eines technischen a-Olefinoxids mit einem Epoxysauerstoffgehalt von 8,2 Gew-% wird bei 30° C in gleicher Weise wie in Beispiel 5 beschrieben ein Polyetherol, dessen Eigenschaften in Tabelle 1 enthalten sind, hergestellt.

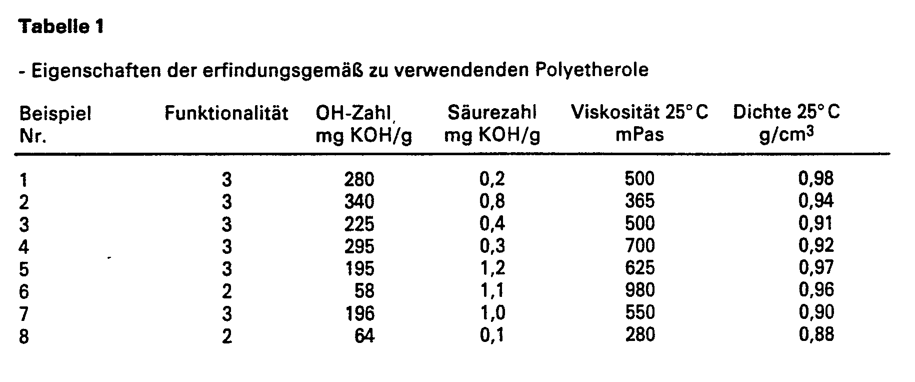

### Wasseraufnahme und Reaktivität der erffindungsgemäß zu verwendenden Polyetherole

### a) Wasseraufnahme

Die Wasseraufnahme der Polyetherole wird nach folgender Methode bestimmt. Etwa 2 g des Polyetherols werden mit einer Genauigkeit von ± 0,2 % in einer Petrischale abgewogen und 7 Tage bei 20° C und einer relativen Luftfeuchte von über 98 % gelagert. Die während dieser Zeit absorbierte Wassermenge wird durch erneute Auswaage ermittelt. Die Wasseraufnahmewerte sind in Tabelle 2 enthalten. Zum Vergleich sind einige Polyethertriole und -diole auf Basis von Propylenoxid und Ethylenoxid mit verschiedenen OH-Zahlen aufgeführt. Aus Tabelle 2 ist ersichtlich, daß die erfindungsgemäß zu verwendenden Polyetherole deutlich geringere Wasseraufnahmewerte aufweisen als die Vergleichspolyole, die eine ähnliche OH-Zahl haben.

### b) Reaktivität

Die Reaktivität der Polyetherole wird durch Bestimnung der Topfzeit eines Zweikomponentensystems, bestehend aus dem Polyetherol und einem handelsüblichen Polyisocyanat mit der näherungsweisen Strukturformel 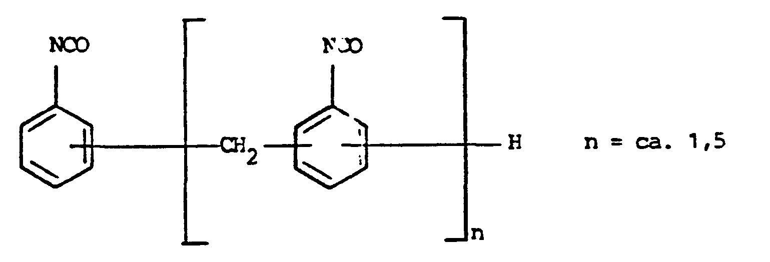 ermittelt. Das Polyphenyl-polymethylen-polyisocyanat hat einen NCO-Gehalt von 31 Gew.-%. Das molare Verhältnis von Hydroxyl- zu Isocyanatgruppen in der Mischung beträgt 1:1,05. Sofort nach dem Vermischen weiden 100 g der Mischung auf 25°C temperiert, und die Viskosität der Mischung wird laufend gemessen, bis eine Viskosität von 10⁵ mPas bei 25°C erreicht ist. Der Zeitraum vom Mischen bis zum Erreichen einer Viskosität von 10 mPas wird als Topfzeit bezeichnet. Die Topfzeiten der erfindungsgemäß zu verwendenden Polyetherole und einiger Vergleichspolyetherole sind in Tabelle 2 aufgeführt. Es ist ersichtlich, daß die erfindungsgemäß zu verwendenden Polyetherole ähnlich lange, in einigen Fällen sogar längere Topfzeiten aufweisen als die Vergleichspolyetherole. Eine Beeinträchtigung der Verarbeitungszeit von Klebstoffabmischungen tritt somit nicht ein.

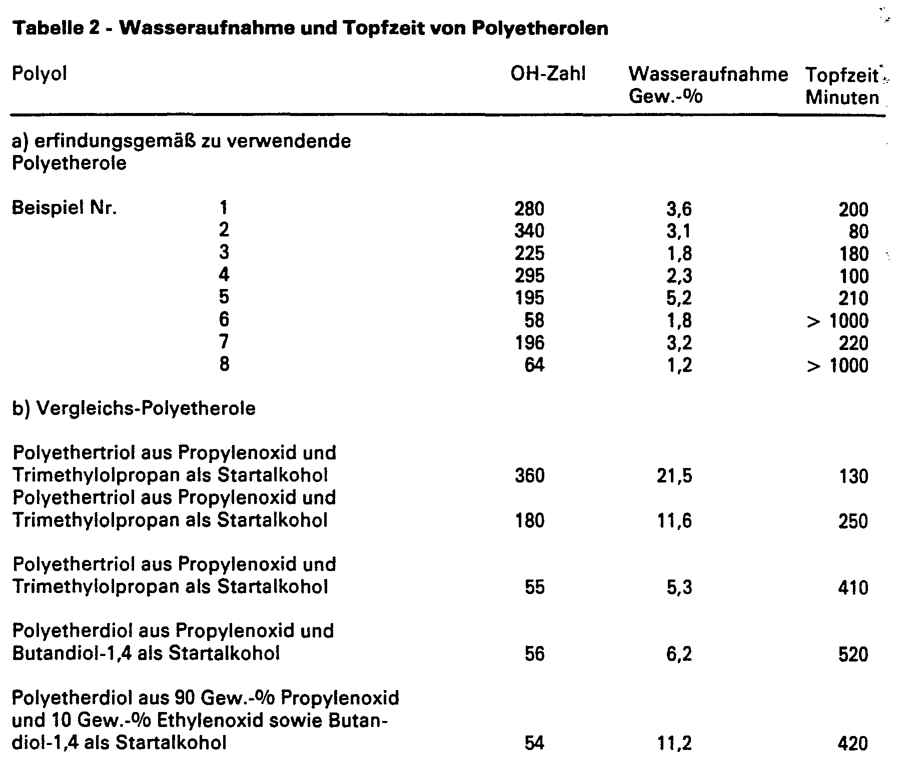

Klebstoffe aus den erfindungsgemäß zu verwendenden Polyetherolen und Polyisocyanaten und deren Festigkeiten

Im folgenden Beispiel werden die Eigenschaften der neuen zweikomponentigen, lösungsmittelfreien Polyurethanklebstoffe gezeigt. Diese sind hochelastisch und zeigen gute Schälfestigkeiten im Verbund mit Metallen und
a) Glas
b) Polyethylen

### a) Verbund Aluminium/Glas

Die Polyolkomponente des Klebstoffs enthält 50 Gew.-% Calciumcarbonat, 49,9 Gew.-% eines Gemisches mehrerer Polyole und 0,1 Gew.-% Dibutylzinndilaurat als Beschleuniger. Das Polyolgemisch hat folgende Zusammensetzung:
4 Gew.-% Polyetherol aus Beispiel 1, 2 oder 5
42 Gew.-% Polyetherol aus Beispiel 6
33 Gew.-% hydroxy-funktionelles Polyacrylat, OH-Zahl 38
21 Gew.-% Polyetherol, OH-Zahl 124, hergestellt aus Propylenoxid und Butyldiglykol als Startalkohol.

Das hydroxy-funktionelle Polyacrylat wurde durch gemeinsame Copolymerisation von 75 Gew.-% n-Butylacrylat, 20 Gew.-% Vinylacetat und 5 Gew.-% 2-Hydroxyethylacrylat in Gegenwart von 2,2 Gew:-% 2-Mercaptoethanol (bezogen auf die Gesamtmenge an Monomeren) gemäß der DE-OS 30 47 926 erhalten. Die Viskosität des Acrylcopolymerisats beträgt 45 000 mPas bei 25° C.

Das Polyetherol aus Propylenoxid und Butyldiglykol ist ein handelsübliches Produkt und hat eine Viskosität von 25 mPas bei 25°C.

Als Polyisocyanatkomponente wird eine Mischung aus 96 Gew.-% eines handelsüblichen aliphatischen Triisocyanats der näherungsweisen Strukturformel 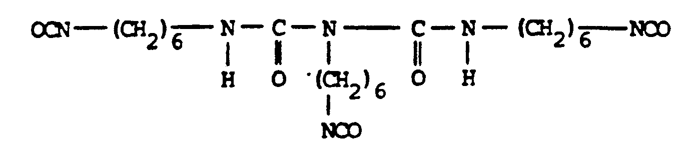 mit einem NCO-Gehalt von 22 Gew.-% und 4 Gew.-% y-Glycidyloxypropyltrimethoxysilan eingesetzt.

Das molare Verhältnis von Hydroxyl- zu Isocyanatgruppen beträgt in der Klebstoffmischung 1:1.

Zur Ermittlung der Schälfestigkeit wird der Rollenschälversuch nach DIN 53 289 herangezogen. Hierbei werden 0,5 mm dicke Aluminiumbleche der Legierung AI Cu Mg 2pl mit 3 mm dicken Glasplatten verklebt. Danach wird das Aluminium blech bei 20° C abgeschält. Das Aluminium wird durch eine übliche Chromat-Schwefelsäurebeize vorbehandelt.

Die Klebstoffmenge betragt etwa 150 g/m^{2.} Die Härtung erfolgt bei 80°C in 5 min, danach wird zur Vervollständigung der Härtung noch 3 Tage bei Raumtemperatur gelagert.

Die Schälfestigkeitswerte sind der Tabelle 3 zu entnehmen. Die Beispiele 9, 10 und 11 enthalten erfindungsgemäße Klebstoffe.

1 Im Vergleichsbeispiel 12 besteht die Polyolkomponente nur aus dem hydroxy-funktionellen Polyacrylat und dem Polyetherol aus Propylenoxid und Butyldiglykol im Gewichtsverhältnis 60 : 40. Abgesehen von der sehr hohen Viskosität der Klebstoffmischung, die eine Verarbeitung erheblich erschwert, ist die Schälfestigkeit gering, weil dei Klebstoif nicht gut auf Glas haftet.

Im Vergleichsbeispiel 13 werden die Polyetherole aus Beispiel 1, 2 oder 5 durch ein handelsübliches Polyetherol aus Propylenoxid und Trimethylolpropan als Startalkohol mit einer OH-Zahl von 360 und das Polyetherol aus Beispiel 6 durch ein handelsübliches Polyetherol aus Propylenoxid und Butandiol-1,4 als Startalkohol mit einer OH-Zahl von 56 ersetzt. Die Haftung des Klebstoffs auf Glas ist auch hier gering, was sich in einer niedrigen Schälfestigkeit äußert.

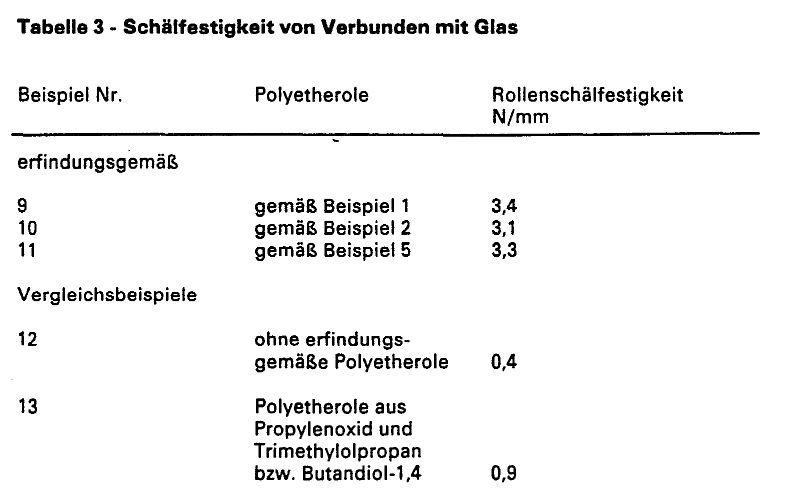

### b) Verbund Polyethylen/Stahl

Die Polyolkomponente des Klebstoffs enthält 50 Gew.-% Calciumcarbonat und 50 Gew.-% eines Gemisches mehrerer Polyole mit folgender Zusammensetzung:
4 Gew.-% Polyetherol aus Beispiel 2, 3,4 oder 7
42 Gew.-% Polyetherol aus Beispiel 8
54 Gew.-% hydroxy-funktionelles Polybutadien, OH-Zahl 47.

Das im Handel erhältliche hydroxy-funktionelle Polybutadien hat eine mittlere Funktionalität von 2,3 und eine Viskosität von 5000 mPas bei 30° C.

Als Polyisocyanatkomponente wird das obenerwähnte Polyphenylpolymethylen-polyisocyanat mit einem NCO-Gehalt von 31 Gew.-% eingesetzt. Das molare Verhältnis von Hydroxyl- zu Isocyanatgruppen beträgt 1 : 1,1.

Zur Ermittlung der Schälfestigkeit wird der Rollenschälversuch nach DIN 53 289 herangezogen, wobei 1 mm dickes, aufgerauhtes, hochmolekulares Polyethylen mit 3 mm dicken Stahlplatten, deren Oberfläche zuvor gestrahlt wurde, verklebt wird. Die Härtung erfolgt bei Raumtemperatur über 5 Tage. Die Klebstoffmenge betragt 200 g/m². Die Schälfestigkeitswerte sind der Tabelle 4 zu entnehmen.

Die Beispiele 14 bis 17 enthalten erfindungsgemäße Klebstoffe.

Im Vergleichsbeispiel 18 besteht die Polyolkomponente lediglich aus dem hydroxy-funktionellen Polybutadien. Der Klebstoff läßt sich wegen seiner hohen Viskosität nur schlecht verarbeiten. Die Schälfestigkeit ist geringer als bei den erfindungsgemäßen Klebstoffen.

Im Vergleichsbeispiel 19 werden die erfindungsgemäß zu verwendenden Polyetherole ersetzt durch handelsübliche Polyetherole vergleichbarer OH-Zahl aus Propylenoxid und Trimethylolpropan bzw. I Butandiol-1,4 als Startalkohole. Der Klebstoff ist unbrauchbar, weil wegen Unverträglichkeit mit dem Polybutadien sofort Entmischung entritt.

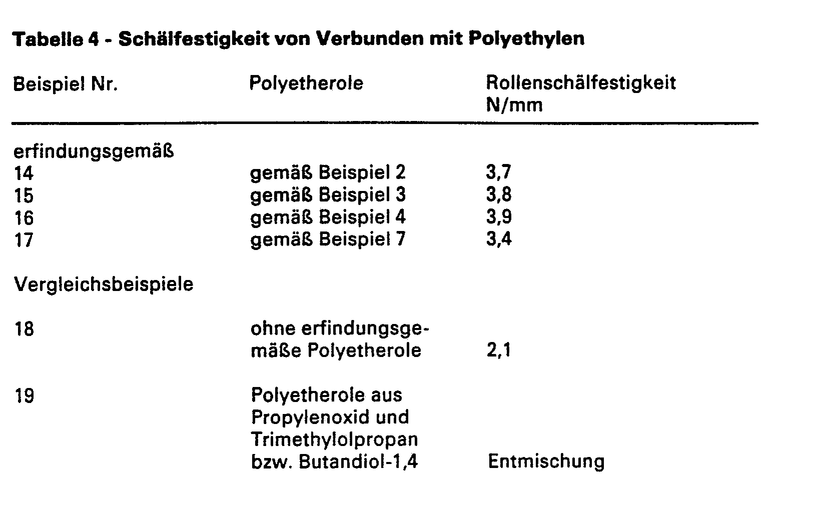

## Patentansprüche

1. Verwendung von Polyetherolen, erhältlich durch Anlagerung von 30 bis 100 Gew.-% eines oder mehrerer Alkylenoxide mit 4 bis 20 Kohlenstoffatomen,
0 bis 70 Gew.-% Tetrahydrofuran, wobei ein oder mehrere Wasserstoffreste durch niedere Alkylreste, vorzugsweise Methylreste, ersetzt sein können und
0 bis 50 Gew.-% Propylenoxid (Gew.-% jeweils auf Gesamtmenge der Alkylenoxide bezogen)
blockweise oder in statistischer Anordnung an 1- bis 4-wertige Alkohole mit bis zu 8 Kohlenstoffatomen, wobei die Alkylenoxide in solcher Menge angelagert sind, daß die Polyetherole eine OH-Zahl von 30 bis 450 aufweisen,
als ausschließliche oder anteilige Polyolkomponente und von Polyisocyanaten der Formel 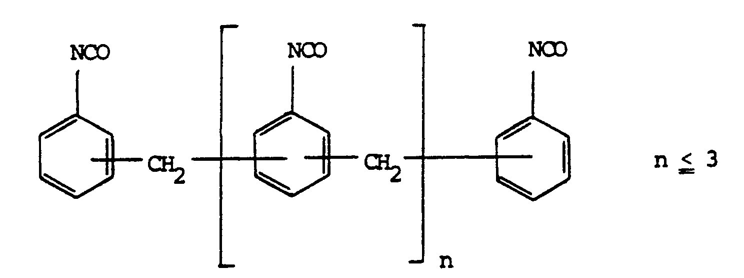 oder 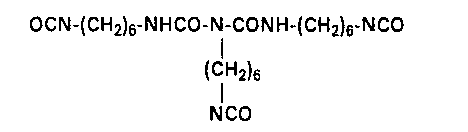 als ausschließliche Polyisocyanatkomponente zur Herstellung von Klebmitteln auf Polyurethanhasis.

## Claims

1. Use of polyether-ols, obtainable by addition of 30 to 100 % by weight of one or more alkylene oxides having 4 to 20 carbon atoms,
0 to 70 % by weight of tetrahydrofuran, it being possible for one or more hydrogen radicals to be replaced by lower alkyl radicals, preferably methyl radicals, and
0 to 50 % by weight of propylene oxide (% by weight relating in each case to the total quantity of alkylene oxides),
blockwise or in a random arrangement, to monohydric to tetrahydric alcohols having up to 8 carbon atoms, the alkylene oxides being added in such a quantity that the polyether-ols have an OH number of 30 to 450,
as the sole or partial polyol component and of polyisocyanates of the formula 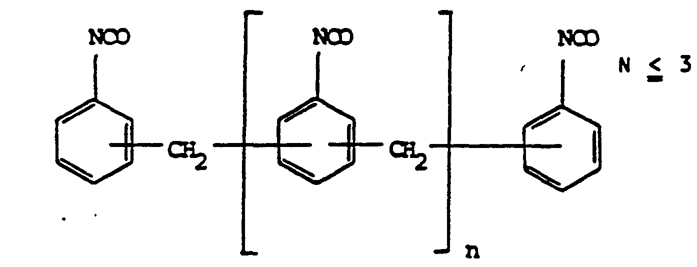 or 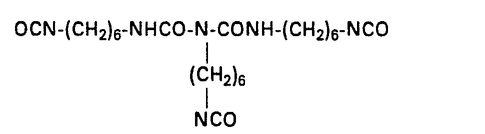 as the sole polyisocyanate component for the preparation of adhesives based on polyurethane.

## Revendications

1. Utilisation de polyéthérols, que l'on peut obtenir par addition, de
30 à 100 % en poids d'un ou plusieurs oxydes d'alkylène ayant de 4 à 20 atomes de carbone,
0 à 70 % en poids de tétrahydrofuranne, un ou plusieurs atomes d'hydrogène pouvant être remplacés par des radicaux alkyle inférieurs, de préférence des radicaux méthyle, et
0 à 50 % en poids d'oxyde de propylène (les pourcentages en poids étant dans chaque cas rapportés à la quantité totale des oxydes d'alkylène)
selon une disposition séquencée ou statistique, sur des mono- à tétra-alcools ayant jusqu'à 8 atomes de carbone, les oxydes d'alkylène étant fixés par addition en une quantité telle que les polyéthérols présentent un indice d'hydroxyle de 30 à 450,
en tant que composant polyol, exclusif ou partiel, et de polyisocyanates de formule 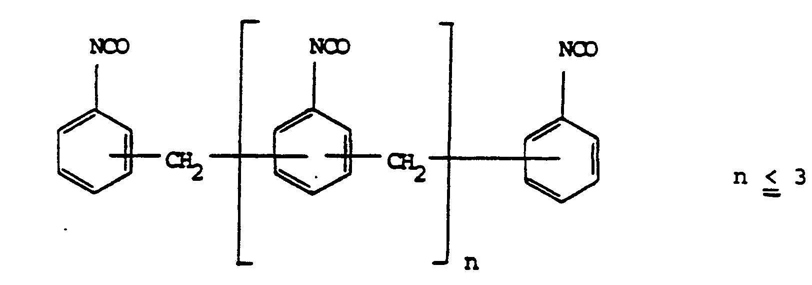 ou 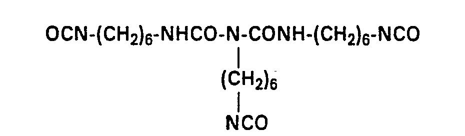 en tant que composant polyisocyanate exclusif, pour la préparation d'adhésifs à base de polyuréthanne.
